(19) Europäisches Patentamt
European Patent Office
Office européen des brevets

(11) Numéro de publication: **0 270 453 B1**

(12) **FASCICULE DE BREVET EUROPEEN**

(45) Date de publication de fascicule du brevet: **10.03.93**

(51) Int. Cl.[5]: **G21C 19/46**, C01G 56/00, C01G 57/00, C22B 60/02

(21) Numéro de dépôt: **87402680.0**

(22) Date de dépôt: **26.11.87**

(54) **Procédé pour séparer le technetium présent dans un solvant organique avec du zirconium et au moins un autre métal tel que l'uranium ou le plutonium, utilisable notamment pour le retraitement des combustibles nucléaires irradiés.**

(30) Priorité: **03.12.86 FR 8616911**

(43) Date de publication de la demande:
**08.06.88 Bulletin 88/23**

(45) Mention de la délivrance du brevet:
**10.03.93 Bulletin 93/10**

(84) Etats contractants désignés:
**BE DE GB IT**

(56) Documents cités:
**FR-A- 1 582 784**
**FR-A- 2 559 612**
**US-A- 2 982 600**
**US-A- 3 374 068**
**US-A- 4 092 265**
**US-A- 4 162 231**
**US-A- 4 358 426**
**US-A- 4 443 413**
**US-A- 4 528 165**

**CHEMICAL ABSTRACTS, vol. 102, 1985, page 465, résumé no. 227761x, Columbus, Ohio, US; J. GARRAWAY: "The behavior of technetium in nuclear fuel reprocessing plant", & INST. CHEM. ENG. SYMP. SER. 1984, 88(Extr. 84), 47-56**

(73) Titulaire: **COMMISSARIAT A L'ENERGIE ATOMIQUE Etablissement de Caractère Scientifique Technique et Industriel**
**31/33, rue de la Fédération**
**F-75015 Paris(FR)**

Titulaire: **SOCIETE GENERALE POUR LES TECHNIQUES NOUVELLES S.G.N. Société anonyme dite:**
**1, rue des Hérons Montigny-le-Bretonneux**
**F-78184 Saint-Quentin-en-Yvelines Cédex(FR)**

(72) Inventeur: **Boullis Bernard**
**2, rue des Tourelles**
**F-92290 Chatenay Malabry(FR)**
Inventeur: **Gue, Jean-Paul**
**7, rue Pierre Brossolette**
**F-92260 Fontenay aux Roses(FR)**
Inventeur: **Bernard, Claude**
**62, Avenue d'Assas**
**F-78410 Saint Remy les Chevreuses(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.5x/3.0.1)

(74) Mandataire: **Mongrédien, André et al**
**c/o BREVATOME 25, rue de Ponthieu**
**F-75008 Paris (FR)**

## Description

La présente invention a pour objet un procédé de traitement d'une solution aqueuse contenant de l'uranium, du plutonium, du zirconium et du technétium pour séparer le technétium, en particulier dans les premiers stades du retraitement des combustibles nucléaires irradiés.

Le technétium qui s'est formé dans les éléments combustibles pendant leur séjour dans un réacteur nucléaire, se présente essentiellement sous la forme de l'isotope $^{99}Tc$ dont la période est de $2,1.10^5$ ans ; il est partiellement solubilisé lors de l'opération de dissolution du combustible irradié et il se trouve ainsi à l'état de valence (VII), sous la forme d'ions pertechnétate, dans les solutions de dissolution de combustibles irradiés qui sont généralement des solutions nitriques.

Dans les installations de retraitement de combustibles irradiés, les solutions nitriques de dissolution sont tout d'abord soumises à un premier cycle d'extraction qui consiste à séparer simultanément le plutonium et l'uranium par extraction dans un solvant organique, généralement le phosphate de tributyle, avec certains produits de fission. On procède ensuite à l'opération de partition uranium/plutonium qui consiste à mettre en contact le solvant organique contenant l'uranium, le plutonium et les produits de fission extraits avec une solution aqueuse renfermant un agent chimique susceptible de réduire le plutonium de l'état (IV) à l'état (III) pour réextraire celui-ci en phase aqueuse alors que l'uranium reste dans le solvant organique. Pour cette opération, l'agent réducteur généralement utilisé est le nitrate uraneux auquel on ajoute toutefois un agent stabilisant constitué par du nitrate d'hydrazine qui a pour fonction de protéger les espèces réduites uranium (IV) et plutonium (III) des agents oxydants présents dans la solution, car ces espèces réduites ne sont pas stables en l'absence de cet agent stabilisant. Ainsi, un défaut de nitrate d'hydrazine, lors de l'opération de partition uranium/plutonium, ne permet pas de réaliser celle-ci dans des conditions satisfaisantes.

Lors du premier cycle d'extraction, le technétium peut être extrait par le solvant organique utilisé, généralement le phosphate de tributyle, grâce à des mécanismes de coextraction avec d'autres éléments extractibles ; dans le cas du phosphate de tributyle (TBP), on suppose que ces mécanismes reposent en fait sur la substitution de groupements nitrate par des groupements pertechnétate au sein du complexe métallique neutre extrait par le phosphate de tributyle, ce qui peut être schématisé de la façon suivante :

$$\left[M^{n+}(NO_3^-)_n, xTBP\right]_{org} + m\,TcO^-_{4aq} \rightleftharpoons$$

$$\left[M^{n+}(NO_3^-)_{n-m}(TcO_4^-)_m, xTBP\right]_{org} + mNO^-_{3aq}$$

avec M représentant un métal extractible dans le TBP.

Ce mécanisme peut intervenir lors de l'extraction de l'uranium et du plutonium dans le solvant organique, mais il se produit également avec certains produits de fission particuliers tels que le zirconium qui sont présents en quantité non négligeable. Il en résulte que l'extraction du technétium dans le solvant organique sera d'autant plus forte :

- que l'extraction du métal concerné sera importante ; et
- que l'acidité nitrique du milieu aqueux sera moins élevée en raison de l'effet de compétition $TcO_4^-/NO_3^-$.

Toutefois, le phénomène de substitution décrit ci-dessus n'affecte pas de manière identique l'extraction de chacun des éléments concernés ; on a ainsi observé que la coextraction technétium/métal est :

- limitée si le métal est l'uranium (VI),
- plus sensible si le métal est le plutonium (IV) ; et
- très importante si le métal est le zirconium (IV);

Aussi, dans le premier cycle d'extraction, c'est-à-dire lors de la mise en contact de la solution nitrique de dissolution avec le solvant organique, le mécanisme prépondérant d'extraction du technétium sera lié à la coextraction zirconium/technétium et en l'absence de dispositions particulières, l'extraction par le solvant organique du technétium présent dans la solution de dissolution sera quasi totale; cela est dû au caractère prépondérant et très fort du phénomène de coextraction technétium/zirconium.

Or, cette présence de technétium au stade suivant qui est l'opération de partition uranium/plutonium, peut conduire à des dysfonctionnements graves, voire rédhibitoires. En effet, le technétium joue le rôle de catalyseur dans le processus de destruction du nitrate d'hydrazine dont la présence est essentielle pour

réaliser l'opération de partition uranium/plutonium dans de bonnes conditions.

Aussi, la destruction du nitrate d'hydrazine par le technétium peut avoir pour conséquence :

- soit de rendre l'opération de partition uranium/plutonium totalement inopérante, ce qui pourrait conduire à un phénomène d'accumulation du plutonium dans les solutions qui présenterait des dangers en raison des risques de criticité ;
- soit de à conduire une consommation excessive de nitrate d'hydrazine, entraînant la formation en quantité non négligeable de produits de réaction gênants dans les étapes ultérieures du procédé.

En effet, parmi les produits de décomposition de l'hydrazine, l'acide hydrazoïque est par exemple un produit indésirable car il est susceptible de donner des sels instables ou explosifs.

Aussi, pour réaliser l'opération de partition uranium/plutonium dans de bonnes conditions, il est souhaitable de minimiser la teneur en technétium du solvant organique contenant l'uranium et le plutonium avant de procéder à cette opération.

Jusqu'à présent, on a récupéré le technétium des solutions de traitement de combustibles irradiés à des stades ultérieurs du procédé, c'est-à-dire après l'opération de partition uranium/plutonium.

Ainsi, le brevet américain US-A-4 528 165 décrit un procédé de séparation du technétium dans lequel on récupère le technétium dans la solution aqueuse contenant l'uranium qui est obtenue après l'opération de partition uranium/plutonium. Pour cette séparation, on réduit le technétium et on le complexe avec de l'acide oxalique puis on extrait l'uranium dans un solvant organique tel que le phosphate de tributyle, et l'on récupère ainsi le technétium en solution aqueuse.

Le brevet américain US-A-4 443 413 décrit également un procédé de récupération du technétium dans la solution aqueuse contenant l'uranium qui est obtenue après l'opération de partition uranium/plutonium. Dans ce cas, on met en contact la solution aqueuse avec de l'hydrazine pour réduire $Tc^{+7}$, puis on met en contact cette solution aqueuse avec une phase organique contenant du phosphate de tributyle pour extraire l'uranium dans la phase organique et maintenir le technétium en solution aqueuse.

Ces procédés sont satisfaisants et conduisent à de bons taux de récupération du technétium ; cependant, ils ne peuvent être utilisés pour éliminer le technétium avant l'opération de partition uranium/plutonium car les agents réducteurs utilisés dans ces procédés sont capables de réduire le plutonium IV en plutonium III, qui serait réextrait de ce fait dans les effluents aqueux.

La présente invention a précisément pour objet un procédé de traitement d'une solution aqueuse contenant de l'uranium, du plutonium, du zirconium et du technétium, qui peut justement être utilisé dans une installation de retraitement de combustibles irradiés pour éliminer le technétium avant l'opération de partition uranium/plutonium.

Ce procédé peut être mis en oeuvre en effectuant les étapes suivantes :

1°) - mise en contact de la solution aqueuse avec un solvant organique dans un extracteur A pour extraire l'uranium, le plutonium, le zirconium et le technétium dans le solvant organique,

2°) - mise en contact du solvant organique sortant de l'extracteur A avec une solution aqueuse contenant au moins un composé choisi parmi l'acide nitrique et les nitrates minéraux à une teneur totale de 1 à 4 mol/l dans un extracteur B pour réextraire le zirconium dans la solution aqueuse, et

3°) - mise en contact du solvant organique sortant de l'extracteur B avec une solution aqueuse contenant au moins un composé choisi parmi l'acide nitrique et les nitrates minéraux à une teneur totale de 1 à 15 mol/l dans un extracteur C pour réextraire la majeure partie du technétium dans la solution aqueuse.

Dans la deuxième étape de ce procédé, la concentration en acide nitrique et/ou en nitrate de la solution aqueuse ainsi que le rapport en volume solvant organique/solution aqueuse sont choisis en fonction des concentrations en métaux du solvant organique, par exemple des concentrations en zirconium et en uranium, de façon à obtenir une réextraction quasi-complète du zirconium dans la solution aqueuse. On utilise généralement pour cette mise en contact un rapport en volume solution aqueuse/solvant organique allant de 0,05 à 0,5, ce qui, compte tenu du niveau de saturation en uranium du solvant organique, permet d'obtenir la réextraction complète du zirconium en solution aqueuse.

Le procédé de l'invention est très intéressant, car il ne nécessite pas l'addition d'agents chimiques particuliers au sein de la solution à traiter pour réextraire le technétium. De ce fait, il est particulièrement avantageux pour assurer la séparation du technétium aux premiers stades de traitement des solutions de dissolution de combustibles nucléaires irradiés.

En effet, il permet d'éliminer pratiquement la majeure partie du technétium sans qu'il soit nécessaire d'ajouter au solvant organique des agents chimiques qui seraient susceptibles de conduire à des effets secondaires défavorables, voire rédhibitoires, dans les phases ultérieures du processus de retraitement des combustibles irradiés.

Par ailleurs, dans ce procédé, on peut effectuer les opérations de réextraction du zirconium et du technétium en utilisant des rapports faibles solution aqueuse/solvant organique, ce qui permet de ne pas

augmenter de façon excessive les quantités d'effluents aqueux à traiter dans l'installation.

De plus, la récupération des autres produits de fission est rendue très aisée par la mise en oeuvre de deux opérations successives de lavage de la phase organique par des solutions aqueuses d'acidités différentes.

Dans le procédé de l'invention, l'uranium et le plutonium sont quantitativement extraits par le solvant organique dans l'extracteur A. L'uranium et le plutonium sont partiellement réextraits dans la solution aqueuse avec le zirconium lors de la mise en contact dans l'extracteur B et il en est de même dans l'extracteur C où de l'uranium et du plutonium sont partiellement réextraits dans la solution aqueuse avec le technétium.

Toutefois, on peut récupérer le plutonium et l'uranium réextraits dans l'extracteur B en recyclant dans l'extracteur A la solution aqueuse sortant l'extracteur B. On peut également récupérer l'uranium et le plutonium réextraits dans l'extracteur C en effectuant une étape complémentaire de mise en contact de la solution aqueuse sortant l'extracteur C avec un solvant organique dans un extracteur D pour réextraire dans le solvant organique l'uranium et le plutonium qui ont été extraits avec le technétium.

Le solvant organique sortant de l'extracteur D qui est chargé d'uranium et de plutonium peut être recyclé, soit dans l'extracteur A, soit dans l'extracteur C ou ajouté au solvant organique sortant de l'extracteur C.

Le fait de traiter séparément la solution aqueuse sortant de l'extracteur C par du solvant organique frais dans un extracteur D permet d'éviter que du technétium ne puisse être transféré en quantités importantes dans le solvant organique avec l'uranium et le plutonium car, dans l'extracteur D, il n'y a plus assez de zirconium qui est responsable d'un transfert important du technétium dans les solvants organiques.

Dans ce procédé le zirconium est notablement extrait par le solvant organique dans l'extracteur A, mais il est pratiquement totalement réextrait dans la solution aqueuse circulant dans l'extracteur B. Toutefois, comme généralement on recycle dans l'extracteur A la solution aqueuse sortant de l'extracteur B, le zirconium s'accumule dans l'extracteur A, mais, à la sortie de cet extracteur A, la solution aqueuse contient la plupart du zirconium qui sort avec les effluents de l'opération d'extraction principale de même que la majeure partie des produits de fission hormis le technétium. En revanche, le solvant organique sortant de l'extracteur B ne contient pratiquement plus de zirconium, ce qui est avantageux pour éliminer le technétium dans de bonnes conditions et éviter la présence de zirconium lors des étapes suivantes.

Le technétium est quantitativement extrait dans l'extracteur A où il est transféré dans le solvant organique. Il est partiellement réextrait avec le zirconium dans l'extracteur B où il est transféré en solution aqueuse et peut comme le zirconium s'accumuler dans l'extracteur A lorsqu'on recycle la solution aqueuse sortant de l'extracteur B dans l'extracteur A. Cependant, à la différence du zirconium, il ne se retrouve pas dans les effluents aqueux sortant l'extracteur A, mais quasi-intégralement dans le solvant sortant de l'extracteur B. Le technétium est surtout réextrait en solution aqueuse dans l'extracteur C en proportions d'autant plus importantes que l'acidité de la solution aqueuse est élevée. Dans l'extracteur D, le technétium ne présente plus d'aptitude à être transféré dans le solvant organique puisqu'il n'y a plus de zirconium dans la solution aqueuse. Ainsi, on peut récupérer, à la sortie de l'extracteur D, la quasi-totalité du technétium restant dans la solution aqueuse sortant de l'extracteur C.

Selon une dis position préférentielle, pour obtenir un bon taux de récupération du technétium dans l'extracteur C, tout en limitant à un niveau acceptable la teneur en acide nitrique et/ou en nitrate du solvant organique sortant l'extracteur C, on utilise comme extracteur C un extracteur à contre-courant comportant plusieurs étages et l'on introduit le solvant organique dans le premier étage, une solution aqueuse contenant au moins un composé choisi parmi l'acide nitrique et les nitrates minéraux à une teneur totale de 0,5 à 3 mol/l dans le dernier étage et une solution aqueuse contenant au moins un composé choisi parmi l'acide nitrique et les nitrates minéraux à une teneur totale de 1 à 15 mol/l dans l'un des étages intermédiaires.

Cette disposition préférentielle qui consiste à injecter une solution peu concentrée en acide nitrique et/ou en nitrate à l'extrémité de l'extracteur et à introduire une solution très concentrée en acide et/ou en nitrate au sein de l'extracteur, permet d'obtenir dans la majeure partie de l'extracteur des teneurs élevées en acide nitrique et/ou en nitrate qui, par l'intermédiaire des groupements nitrate qu'elles apportent, sont propices à une bonne réextraction du technétium donc à l'efficacité du procédé, tout en limitant à un niveau acceptable la teneur en acide nitrique et/ou en nitrate du solvant organique sortant de l'extracteur. En effet, la solution peu concentrée permet de réaliser une réextraction partielle de l'acide nitrique et de désacidifier ainsi le solvant organique sortant de cet extracteur.

De même, on peut utiliser comme extracteur A un extracteur comportant plusieurs étages, introduire dans le premier étage le solvant organique, introduire dans le dernier étage la solution aqueuse contenant l'uranium, le plutonium, le zirconium et le technétium, et recycler dans un étage intermédiaire le solvant

organique sortant l'extracteur D.

Selon une variante de mise en oeuvre du procédé de l'invention, on supprime la deuxième étape de récupération du zirconium par mise en contact du solvant organique avec une solution aqueuse dans l'extracteur B, en réalisant la première étape de mise en contact de la solution aqueuse avec le solvant organique dans l'extracteur A dans des conditions telles que le zirconium reste en solution aqueuse. Ceci peut être effectué en choisissant un rapport en volume solution aqueuse/solvant organique tel que le solvant organique sortant l'extracteur A soit pratiquement saturé en uranium et ne puisse extraire que très peu de zirconium.

Comme on l'a vu précédemment, on peut mettre en oeuvre le procédé en utilisant des solutions aqueuses contenant de l'acide nitrique et/ou des nitrates comme les nitrates d'aluminium, de lithium et de sodium, car c'est la teneur en $NO_3^-$ des solutions qui régit les réextractions du zirconium et du technétium en solution aqueuse.

L'utilisation partielle ou totale de nitrates est intéressante car on diminue ainsi les quantités d'acide nitrique extraites en phase organique. L'utilisation de nitrates minéraux présente toutefois l'inconvénient d'augmenter la charge saline des effluents aqueux. Aussi, on préfère généralement utiliser des solutions aqueuses contenant uniquement de l'acide nitrique.

Dans le procédé de l'invention, on peut utiliser différents solvants organiques, en particulier des composés phosphorés ayant un atome donneur d'électrons comme les acides dialkyl phosphoriques, les phosphates d'alkyle et les oxydes de phosphine seuls ou en mélange, éventuellement, avec d'autres solvants organiques connus pour leur aptitude à extraire l'uranium et le plutonium comme les composés à atome de soufre donneurs d'électrons. Généralement, ces solvants organiques comprennent un diluant qui peut être constitué par un hydrocarbure tel que le dodécane.

A titre d'exemple, les composés organophosphorés peuvent répondre aux formules suivantes :

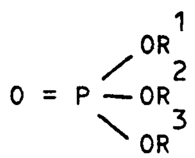

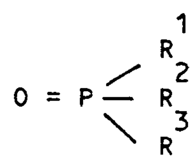

dans lesquelles $R^1$, $R^2$ et $R^3$ qui peuvent être identiques ou différents, sont des radicaux alkyle, aryle ou alcoxyalkyle.

De préférence, le solvant organique est le phosphate de tributyle de formule $O = P\text{-}(OC_4H_9)_3$.

Les extracteurs susceptibles d'être utilisés sont des extracteurs à contre-courant classiques tels que des batteries de mélangeur-décanteur, des colonnes d'échange, des colonnes pulsées, des extracteurs centrifuges, etc. Dans ces extracteurs, les débits de solution aqueuse et de solvant organique sont choisis de façon à obtenir le temps de contact souhaité entre les deux solutions et à recueillir après séparation du zirconium et du technétium un solvant organique contenant généralement de 80 à 90 g/l d'uranium et de plutonium. De même, les rapports en volume solvant organique/solution aqueuse dans les différents extracteurs sont choisis en fonction du résultat que l'on veut obtenir, c'est-à-dire du taux d'uranium et/ou de plutonium à extraire dans le solvant organique et des spécifications visées pour les séparations.

D'autres caractéristiques et avantages de l'invention apparaîtront mieux à la lecture de la description qui suit d'exemples de réalisation donnés bien entendu à titre illustratif et non limitatif en référence aux dessins annexés sur lesquels :

- la figure 1 représente une installation pour le traitement d'une solution aqueuse contenant de l'uranium, du plutonium, du zirconium et du technétium, selon le procédé de l'invention, et
- la figure 2 représente une variante de l'installation de la figure 1 correspondant à la variante de mise en oeuvre du procédé de l'invention.

Sur la figure 1, on voit que l'installation comprend un premier extracteur A, un deuxième extracteur B, un troisième extracteur C et un quatrième extracteur D. Dans cette installation, on introduit la solution aqueuse contenant l'uranium, le plutonium, le zirconium, le technétium et les autres produits de fission, qui provient du stade de dissolution des éléments combustibles irradiés par les conduites 5 et 7 dans le premier extracteur A où elle est mise en contact à contre-courant avec un solvant organique introduit par la canalisation 9.

A la sortie de l'extracteur A, on récupère dans la conduite 11 le solvant organique contenant l'uranium, le plutonium, le zirconium et le technétium extraits et on l'introduit dans le deuxième extracteur B où il est

mis en contact à contre-courant avec une solution aqueuse d'acide nitrique introduite par la conduite 13.

Dans ce second extracteur, les rapports en volume solution aqueuse/solvant organique et la concentration en acide nitrique de la solution aqueuse sont tels que l'on récupère à la sortie de l'extracteur B par la conduite 15 le solvant organique qui ne contient plus que de l'uranium, du plutonium et du technétium. La solution aqueuse sortant du deuxième extracteur par la conduite 17 comprend la plupart du zirconium préalablement extrait dans le premier extracteur, mais aussi une fraction de l'uranium, du plutonium et du technétium et elle est recyclée dans le premier extracteur A par la conduite 7. Le solvant organique sortant du deuxième extracteur est introduit dans le troisième extracteur C où il est mis en contact à contre-courant avec une solution aqueuse nitrique afin de réextraire dans la solution aqueuse la quasi-totalité du technétium. De préférence, cette solution aqueuse est introduite en deux endroits de l'extracteur. Ainsi, on introduit par la conduite 19 une solution aqueuse ayant une acidité en acide nitrique de 0,5 à 3 mol/l et en 21 une solution d'acide nitrique concentrée pour extraire davantage de technétium. On récupère ainsi à la sortie du troisième extracteur C par la conduite 23 une solution aqueuse contenant la majeure partie du technétium ainsi que de l'uranium et du plutonium. Le solvant organique sortant du troisième extracteur par la conduite 25 contient de l'uranium, du plutonium et des traces de technétium ($\epsilon$Tc) et il peut être ensuite soumis à l'opération de partition uranium/plutonium dans de bonnes conditions.

La solution aqueuse sortant du troisième extracteur qui contient la majeure partie du technétium, de l'uranium et du plutonium est introduite dans le quatrième extracteur D où elle est mise en contact avec un solvant organique introduit par la conduite 27. Dans ce quatrième extracteur, le solvant organique extrait l'uranium et le plutonium présents dans la solution aqueuse et le solvant sortant de l'extracteur par la conduite 29 peut être recyclé dans l'extracteur A à un étage intermédiaire de celui-ci. La solution aqueuse sortant du quatrième extracteur par la conduite 31 contient le technétium réextrait dans le troisième extracteur. On récupère également par la conduite 33 sortant du premier extracteur A un effluent aqueux qui contient le zirconium et l'essentiel des produits de fission, sauf le technétium.

A titre d'exemple, on donne, ci-après, les conditions de fonctionnement d'une installation utilisant comme solvant organique du phosphate de tributyle à 30% en volume dans du dodécane.

Dans cette installation, le premier, le deuxième, le troisième et le quatrième extracteurs comprennent chacun 6 étages.

Le solvant organique provenant du quatrième extracteur est recyclé dans le premier extracteur au niveau du cinquième étage et l'acide nitrique concentré est introduit par la conduite 21 au niveau du quatrième étage du troisième extracteur. Les débits d'introduction du solvant organique et des solutions aqueuses sont les suivants :

- débit de solvant organique dans la conduite 9 : 2,5 $l.h^{-1}$
- débit d'introduction de solvant organique par la conduite 29 : 0,7 $l.h^{-1}$,
- débit d'introduction de la solution aqueuse à traiter par la conduite 5 : 1 $l.h^{-1}$,
- débit d'introduction de la solution nitrique en 13 dans le deuxième échangeur : 0,5 $l.h^{-1}$,
- débit d'introduction de la solution d'acide nitrique 1 M en 19 : 0,55 $l.h^{-1}$,
- débit d'introduction de la solution d'acide nitrique 13,6 M en 21 : 0,2 $l.h^{-1}$.

Les concentrations en acide nitrique des solutions introduites dans les extracteurs B et C sont les suivantes :

- en 13 : 2 $mol.l^{-1}$,
- en 21 : 13,6 $mol.l^{-1}$,
- en 19 : 1 $mol.l^{-1}$

Les concentrations en uranium, en plutonium, en zirconium, en technétium et en acide nitrique du solvant organique et des solutions aqueuses sortant de l'installation sont données dans le tableau 1 qui suit.

TABLEAU 1

| Concentrations | Solution aqueuse (en 5) | Solution aqueuse (en 33) | Solution aqueuse (en 31) | Solvant organique (en 25) |
|---|---|---|---|---|
| U $(g.l^{-1})$ | 250 | ε 1) | ε 1) | 75,3 |
| Pu " | 2,5 | ε 1) | ε 1) | 0,75 |
| Zr " | 1 | 0,7 | ε 1) | ε 1) |
| Tc " | 0,2 | ε 1) | 0,23 | 0,01 |
| HNO3 $(mol.l^{-1})$ | 3 | 2,9 | 3,75 | 0,12 |

1) $\varepsilon \leq 10^{-2}$

Sur la figure 2, on a représenté la variante de réalisation du procédé de l'invention dans laquelle on supprime le deuxième extracteur B. Sur cette figure, on a repris les mêmes références pour désigner les éléments analogues des deux installations. Dans ce cas, on réalise l'extraction dans l'extracteur A dans des conditions telles que le solvant organique sortant par la conduite 11 ne contienne pas de zirconium. Ce solvant organique est alors soumis dans l'extracteur C à une mise en contact pour séparer le technétium qu'il contient en utilisant une solution aqueuse nitrique qui peut être introduite à des concentrations différentes en deux endroits de l'extracteur. La solution aqueuse sortant de l'extracteur C est traitée ensuite dans l'extracteur D pour récupérer l'uranium et le plutonium préalablement réextraits dans l'extracteur C en solution aqueuse, comme dans le cas de la figure 1.

Pour que ce schéma de fonctionnement soit satisfaisant, il est nécessaire de choisir des conditions opératoires dans l'extracteur A permettant de procurer une décontamination efficace vis-à-vis du zirconium. Ceci peut être obtenu en utilisant des débits de circulation du solvant organique et de la solution aqueuse tels que l'on obtienne à la sortie de l'extracteur A un solvant organique ayant une concentration élevée en uranium.

Dans les installations représentées sur les figures 1 et 2, on peut modifier l'alimentation en acide nitrique de l'extracteur C en réalisant une seule alimentation en 19 à condition d'introduire dans ce cas en 19 de l'acide nitrique suffisamment concentré car la quantité de technétium réextraite en solution aqueuse est d'autant plus importante que la teneur en nitrate de la solution aqueuse introduite en 19 est élevée.

On peut encore modifier l'installation en recyclant le solvant organique sortant de l'extracteur D non pas dans l'extracteur A mais en un autre point du circuit de circulation du solvant organique. Dans ce cas, il sera nécessaire d'augmenter le débit du solvant organique dans l'extracteur A, pour obtenir l'extraction de l'uranium et du plutonium dans des conditions satisfaisantes. De ce fait, le débit total de solvant organique qui sera ensuite soumis à l'opération de partition uranium/plutonium sera augmenté. Ceci n'est généralement pas souhaitable en raison de l'augmentation de la taille des appareillages, de la diminution de la concentration en uranium et en plutonium et de la diminution des performances du procédé vis-à-vis de la décontamination en produits de fission.

Bien que la mise en oeuvre du procédé de l'invention nécessite l'utilisation d'extracteurs supplémentaires, celui-ci permet de résoudre dans de bonnes conditions l'élimination du technétium avant l'opération de

partition uranium/plutonium. Par ailleurs, il a pour avantage essentiel de n'introduire aucun élément chimique nouveau dans l'installation de retraitement, élément qui serait susceptible de conduire à des effets secondaires gênants dans les opérations ultérieures du procédé de retraitement.

## Revendications

**1.** Procédé de traitement d'une solution aqueuse contenant de l'uranium, du plutonium, du zirconium et du technétium, caractérisé en ce qu'il comprend les étapes suivantes :
1°) - mise en contact de la solution aqueuse avec un solvant organique dans un extracteur A pour extraire l'uranium, le plutonium, le zirconium et le technétium dans le solvant organique,
2°)- mise en contact du solvant organique sortant de l'extracteur A avec une solution aqueuse contenant au moins un composé choisi parmi l'acide nitrique et les nitrates minéraux à une teneur totale de 1 à 4 mol/l dans un extracteur B pour réextraire le zirconium dans la solution aqueuse, et
3°) - mise en contact du solvant organique sortant de l'extracteur B avec une solution aqueuse contenant au moins un composé choisi parmi l'acide nitrique et les nitrates minéraux à une teneur totale de 1 à 15 mol/l dans un extracteur C pour réextraire la majeure partie du technétium dans la solution aqueuse.

**2.** Procédé de traitement d'une solution aqueuse contenant de l'uranium, du plutonium, du zirconium et du technétium, caractérisé en ce qu'il comprend les étapes suivantes :
1°) - mise en contact de la solution aqueuse avec un solvant organique dans un extracteur A pour extraire l'uranium, le plutonium et le technétium dans le solvant organique, et
2°) - mise en contact du solvant organique sortant de l'extracteur A avec une solution aqueuse contenant au moins un composé choisi parmi l'acide nitrique et les nitrates minéraux à une teneur totale de 1 à 15 mol/l dans un extracteur C pour réextraire le technétium en solution aqueuse.

**3.** Procédé selon l'une quelconque des revendications 1 et 2, caractérisé en ce qu'il comprend en outre une étape de mise en contact de la solution aqueuse sortant de l'extracteur C avec un solvant organique dans un extracteur D pour extraire dans le solvant organique l'uranium et le plutonium qui ont été réextraits avec le technétium dans la solution aqueuse sortant de l'extracteur C.

**4.** Procédé selon la revendication 1, caractérisé en ce que l'on recycle dans l'extracteur A la solution aqueuse sortant de l'extracteur B.

**5.** Procédé selon l'une quelconque des revendications 1 à 4, caractérisé en ce que l'on recycle dans l'extracteur A le solvant organique sortant de l'extracteur D.

**6.** Procédé selon la revendication 5, caractérisé en ce que l'extracteur A comporte plusieurs étages et en ce que l'on recycle le solvant organique sortant de l'extracteur D dans un étage intermédiaire de l'extracteur A.

**7.** Procédé selon la revendication 1, caractérisé en ce que les teneurs en acide nitrique et/ou en nitrate de la solution aqueuse dans au moins une partie de l'extracteur C sont plus élevées que les teneurs en acide nitrique et/ou en nitrate de la solution aqueuse dans l'extracteur B.

**8.** Procédé selon l'une quelconque des revendications 1 à 7, caractérisé en ce que l'extracteur C est un extracteur à contre-courant comportant plusieurs étages, en ce que l'on introduit le solvant organique dans le premier étage, en ce que l'on introduit une solution aqueuse contenant au moins un composé choisi parmi l'acide nitrique, et les nitrates minéraux à une teneur totale de 0,5 à 3 mol/l dans le dernier étage et en ce que l'on introduit une solution aqueuse contenant au moins un composé choisi parmi l'acide nitrique et les nitrates minéraux à une teneur totale de 1 à 15 mol/l dans l'un des étages intermédiaires de l'extracteur C.

**9.** Procédé selon l'une quelconque des revendications 1 à 8, caractérisé en ce que le solvant organique introduit dans l'extracteur A comprend du phosphate de tributyle.

**10.** Procédé selon l'une quelconque des revendications 3, 5 et 6, caractérisé en ce que le solvant organique introduit dans l'extracteur A et dans l'extracteur D comprend du phosphate de tributyle.

11. Procédé selon l'une quelconque des revendications 1 à 10, caractérisé en ce que le composé est l'acide nitrique.

## Claims

1. Process for the treatment of an aqueous solution containing uranium, plutonium, zirconium and technetium, characterised in that it comprises the following steps:
   1) - bringing the aqueous solution into contact with an organic solvent in an extractor A in order to extract the uranium, plutonium, zirconium and technetium into the organic solvent,
   2) - bringing the organic solvent leaving the extractor A) into contact with an aqueous solution containing at least one compound chosen from nitric acid and inorganic nitrates in a total concentration of 1 to 4 mol/l in an extractor B in order to reextract the zirconium into the aqueous solution, and
   3) - bringing the organic solvent leaving the extractor B into contact with an aqueous solution containing at least one compound chosen from nitric acid and inorganic nitrates in a total concentration of 1 to 15 mol/l in an extractor C in order to reextract the bulk of the technetium into the aqueous solution.

2. Process for the treatment of an aqueous solution containing uranium, plutonium, zirconium and technetium, characterised in that it comprises the following steps:
   1) - bringing the aqueous solution into contact with an organic solvent in an extractor A in order to extract the uranium, plutonium and technetium into the organic solvent, and
   2) - bringing the organic solvent leaving the extractor A into contact with an aqueous solution containing at least one compound chosen from nitric acid and inorganic nitrates in a total concentration of 1 to 15 mol/l in an extractor C in order to reextract the technetium into the aqueous solution.

3. Process according to either of Claims 1 and 2, characterised in that it also comprises a step involving bringing the aqueous solution leaving the extractor C into contact with an organic solvent in an extractor D in order to extract into the organic solvent the uranium and plutonium which have been reextracted with the technetium into the aqueous solution leaving the extractor C.

4. Process according to Claim 1, characterised in that the aqueous solution leaving the extractor B is recycled into the extractor A.

5. Process according to any one of Claims 1 to 4, characterised in that the organic solvent leaving the extractor D is recycled into the extractor A.

6. Process according to Claim 5, characterised in that the extractor A comprises several stages and in that the organic solvent leaving the extractor D is recycled into an intermediate stage of the extractor A.

7. Process according to Claim 1, characterised in that the nitric acid and/or nitrate concentrations of the aqueous solution in at least part of the extractor C are higher than the nitric acid and/or nitrate concentrations in the aqueous solution in the extractor B.

8. Process according to any one of Claims 1 to 7, characterised in that the extractor C is a counter-current extractor comprising several stages, in that the organic solvent is introduced into the first stage, in that an aqueous solution containing at least one compound chosen from nitric acid and inorganic nitrates in a total concentration of 0.5 to 3 mol/l is introduced into the final stage and in that an aqueous solution containing at least one compound chosen from nitric acid and inorganic nitrates in a total concentration of 1 to 15 mol/l is introduced into one of the intermediate stages of the extractor C.

9. Process according to any one of Claims 1 to 8, characterised in that the organic solvent introduced into the extractor A comprises tributyl phosphate.

10. Process according to any one of Claims 3, 5 and 6, characterised in that the organic solvent introduced into the extractor A and into the extractor D comprises tributyl phosphate.

**11.** Process according to any one of Claims 1 to 10, characterised in that the compound is nitric acid.

**Patentansprüche**

**1.** Verfahren zur Behandlung einer wäßrigen Lösung, die Uran, Plutonium, Zirconium und Technetium enthält, **dadurch gekennzeichnet,** daß sie die folgenden Schritte umfaßt:
1) Zusammenbringen der wäßrigen Lösung mit einem organischen Lösungsmittel in einer Extraktionsvorrichtung A um das Uran, das Plutonium, das Zirconium und das Technetium in das organische Lösungsmittel hineinzuextrahieren,
2) Zusammenbringen des organischen Lösungsmittels, welches die Extraktionsvorrichtung A verläßt, mit einer wäßrigen Lösung, die mindestens eine Verbindung, ausgewählt aus Salpetersäure und anorganischen Nitraten mit einem Gesamtgehalt von 1 bis 4 Mol/l enthält, in einer Extraktionsvorrichtung B, um das Zirconium in die wäßrige Lösung zurückzuextrahieren, und
3) Zusammenbringen des organischen Lösungsmittels, das die Extraktionsvorrichtung B verläßt, mit einer wäßrigen Lösung, die mindestens eine Verbindung, ausgewählt aus Salpetersäure und anorganischen Nitraten mit einem Gesamtgehalt von 1 bis 15 Mol/l enthält, in einer Extraktionsvorrichtung C, um den Großteil des Technetiums in die wäßrige Lösung zurückzuextrahieren.

**2.** Verfahren zur Behandlung einer wäßrigen Lösung, die Uran, Plutonium, Zirconium und Technetium enthält, **dadurch gekennzeichnet,** daß es die folgenden Schritte umfaßt:
1) Zusammenbringen der wäßrigen Lösung mit einem organischen Lösungsmittel in einer Extraktionsvorrichtung A um das Uran, das Plutonium und das Technetium in das organische Lösungsmittel hineinzuextrahieren, und
2) Zusammenbringen des organischen Lösungsmittels, welches die Extraktionsvorrichtung A verläßt, mit einer wäßrigen Lösung, die mindestens eine Verbindung, ausgewählt aus Salpetersäure und anorganischen Nitraten mit einem Gesamtgehalt von 1 bis 15 Mol/l enthält, in einer Extraktionsvorrichtung C, um das Technetium in die wäßrige Lösung zurückzuextrahieren.

**3.** Verfahren nach einem der Ansprüche 1 und 2, **dadurch gekennzeichnet,** daß es darüberhinaus einen Schritt des Zusammenbringens der wäßrigen Lösung, die die Extraktionsvorrichtung C verläßt, mit einem organischen Lösungsmittel in einer Extraktionsvorrichtung D umfaßt, um das Uran und das Plutonium, welche zusammen mit dem Technetium in die wäßrige Lösung, die die Extraktionsvorrichtung C verläßt, zurückextrahiert worden sind, in das organische Lösungsmittel zu extrahieren.

**4.** Verfahren nach Anspruch 1, **dadurch gekennzeichnet,** daß die wäßrige Lösung, die die Extraktionsvorrichtung B verläßt, in die Extraktionsvorrichtung A zurückgeführt wird.

**5.** Verfahren nach einem der Ansprüche 1 bis 4, **dadurch gekennzeichnet,** daß das organische Lösungsmittel, das die Extraktionsvorrichtung D verläßt, in die Extraktionsvorrichtung A zurückgeführt wird.

**6.** Verfahren nach Anspruch 5, **dadurch gekennzeichnet,** daß die Extraktionsvorrichtung A mehrere Böden enthält und daß das organische Lösungsmittel, das die Extraktionsvorrichtung D verläßt, auf einen dazwischenliegenden Boden der Extraktionsvorrichtung A zurückgeführt wird.

**7.** Verfahren nach Anspruch 1, **dadurch gekennzeichnet,** daß die Gehalte an Salpetersäure und/oder Nitrat in der wäßrigen Lösung mindestens in einem Teil der Extraktionsvorrichtung C höher sind als die Gehalte an Salpetersäure und/oder Nitrat in der wäßrigen Lösung in der Extraktionsvorrichtung B.

**8.** Verfahren nach einem der Ansprüche 1 bis 7, **dadurch gekennzeichnet,** daß die Extraktionsvorrichtung C eine Gegenstrom-Extraktionsvorrichtung ist, die mehrere Böden umfaßt, daß das organische Lösungsmittel bei dem ersten Boden eingeführt wird,daß eine wäßrige Lösung, die mindestens eine Verbindung, ausgewählt unter Salpetersäure und anorganischen Nitraten mit einem Gesamtgehalt von 0,5 bis 3 Mol/l enthält, bei dem letzten Boden eingeführt wird, und daß eine wäßrige Lösung, die mindestens eine Verbindung, ausgewählt aus Salpetersäure und anorganischen Nitraten mit einem Gesamtgehalt von 1 bis 15 Mol/l enthält, bei einem der dazwischenliegenden Böden der Extraktionsvorrichtung C eingeführt wird.

9. Verfahren nach einem der Ansprüche 1 bis 8, **dadurch gekennzeichnet,** daß das organische Lösungsmittel, das in die Extraktionsvorrichtung A eingeführt wird, Tributylphosphat umfaßt.

10. Verfahren nach einem der Ansprüche 3, 5 und 6, **dadurch gekennzeichnet,** daß das organische Lösungsmittel, das in die Extraktionsvorrichtung A und in die Extraktionsvorrichtung D eingeführt wird, Tributylphosphat umfaßt.

11. Verfahren nach einem der Ansprüche 1 bis 10, **dadurch gekennzeichnet,** daß die Verbindung Salpetersäure ist.

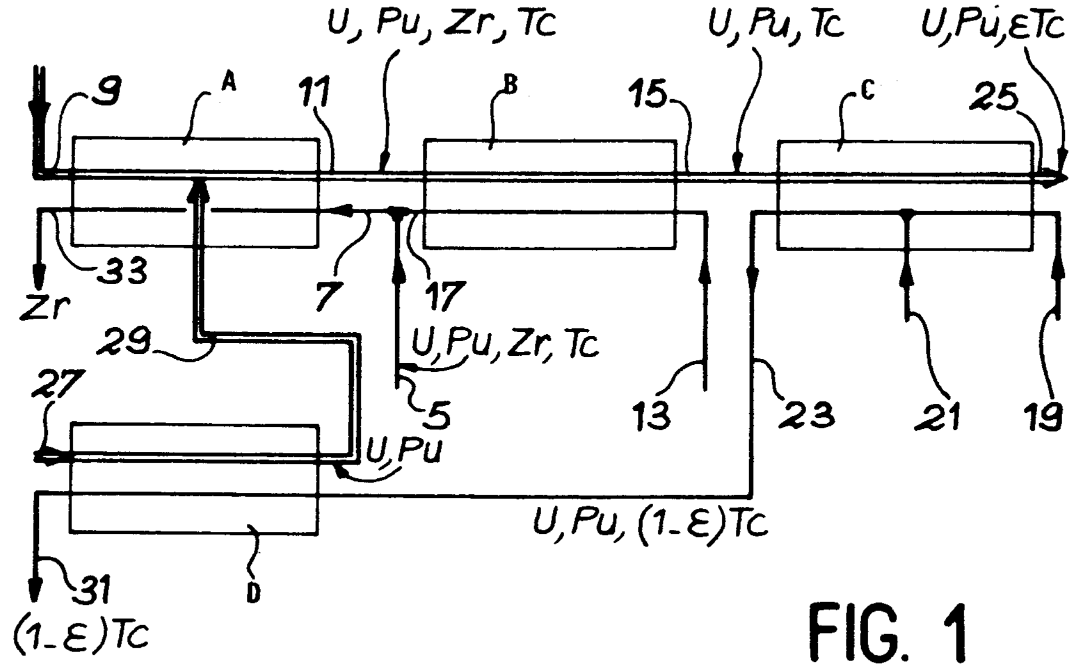

U, Pu, Zr, Tc
U, Pu, Tc
U,Pu,εTc
9
A
11
B
15
C
25
33
Zr
7
17
29
U,Pu, Zr, Tc
5
13
23
21
19
27
U,Pu
U,Pu, (1-ε)Tc
31
D
(1-ε)Tc


FIG. 1

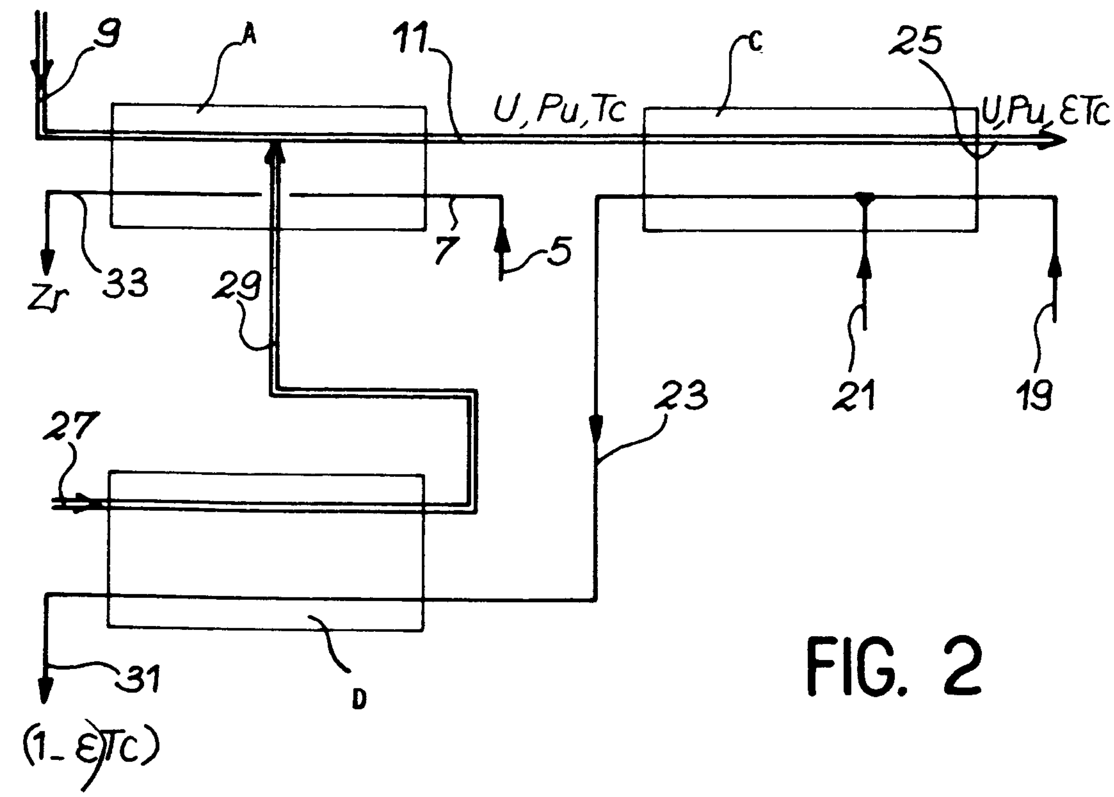

9
A
11
C
25
U, Pu,Tc
U,Pu, εTc
7
5
Zr
33
29
21
19
23
27
31
D
(1-ε)Tc)


FIG. 2